(19) **Europäisches Patentamt / European Patent Office / Office européen des brevets**

(11) **EP 1 592 226 B1**

(12) **EUROPEAN PATENT SPECIFICATION**

(45) Date of publication and mention
of the grant of the patent:
**15.08.2007   Bulletin 2007/33**

(51) Int Cl.:
*H04N 1/40* (2006.01)

(21) Application number: **05103624.2**

(22) Date of filing: **02.05.2005**

(54) **Method for multilevel error diffusion with predetermined level split ratios**

Multilevel-Fehlerdiffusionsverfahren mit vorbestimmten Aufteilungsverhältnissen für die Level

Procédé de diffusion d'erreurs à niveaux multiples avec rapport prédéterminé de la répartition des niveaux

(84) Designated Contracting States:
**DE FR GB**

(30) Priority: **30.04.2004  EP 04101858**

(43) Date of publication of application:
**02.11.2005   Bulletin 2005/44**

(73) Proprietor: **Agfa Graphics N.V.**
**2640 Mortsel (BE)**

(72) Inventor: **Vande Velde, Koen**
**AGFA-GEVAERT**
**2640, Mortsel (BE)**

(74) Representative: **Goedeweeck, Rudi et al**
**Agfa Graphics N.V.**
**IP Department 3622**
**Septestraat 27**
**2640 Mortsel (BE)**

(56) References cited:
US-A- 5 805 178          US-A- 5 963 714
US-A- 6 109 720          US-A1- 2002 051 151
US-A1- 2002 181 987      US-A1- 2003 021 470
US-A1- 2003 179 410

## Description

FIELD OF THE INVENTION

The present invention relates to the halftoning of continuous tone images for use in reproduction of such images.

BACKGROUND OF THE INVENTION

To print a continuous tone image, customarily a halftoning process is applied to the image. Error diffusion, also indicated as "ED" in this document, is a well-established halftoning technique, especially suitable for printers that are able to produce dispersed dots, such as ink-jet printers.

Several error diffusion algorithms exist, that may be used for grey scale and for color. One way to extend an algorithm from grey scale to color is to apply the grey-scale algorithm separately on each color component.

In general, three methods exist to achieve a grey level in an image: area modulated printing, density modulated printing, and the combination of both. In area modulated printing, gray levels are achieved by applying a marking particle (such as ink or toner) to a smaller or larger area of a receiving substrate (such as paper). For ink-jet, this may be achieved by applying a larger quantity of ink, i.e. applying a larger drop size. In density modulated printing, grey levels are achieved by applying different types of marking particles to the receiving substrate, each type having a different density. For ink-jet, different ink densities (such as e.g. light cyan ink and dark cyan ink) may be used.

More information on ED can be found in the following patents.

US 4 680 645 discloses multilevel error diffusion for a grayscale printing device using multiple drop sizes.

US 5 975 671 discloses an error diffusion method for a printing device having multiple ink densities and dot sizes (or drop sizes); the ED levels are translated by a lut to density/drop size combinations. More information on multilevel error diffusion in general can be found in this patent.

US 5 963 714 discloses a multicolor and mixed-mode halftoning method, wherein a printer driver operates a printer capabale of multiple dot-placement geometries or resolutions and multiple inks per color channel. The halftoning includes error diffusion.

In ordinary bilevel ED a gray value is quantized by means of thresholding. If the gray value is larger than the chosen threshold, the value is quantized to 1, otherwise it is quantized to 0. The quantisation error is distributed over neighboring unprocessed pixels. Therefore not the original pixel value is thresholded, but a modified pixel value which is equal to the original pixel value plus the quantization error the pixel has received from other, already processed, pixels. This feedback mechanism guarantees that the right mean tone value is produced.

In multilevel ED, the thresholding procedure is replaced by a more general quantization scheme.

The simplest quantization scheme is to quantize the modified pixel value to the nearest quantization level. The quantization error is once again fed to neighboring unprocessed pixels. The more quantization levels, the smaller the quantization error, and the better the quality of the ED image.

The multilevels are realized in practice in ink-jet printers by using inks of different densities, multiple drop sizes (in this document, the drop size is the amount of ink applied to a given pixel), or a combination of both. Error diffusion may also be applied to other printing techniques than ink-jet. Thus, in general, a level may be realized by a combination of a dot area (cf. the area modulated printing discussed above) and a dot density (cf. density modulated printing as discussed above). Some multilevel printing devices may provide such combinations wherein the dot area is kept constant; others may provide combinations wherein the dot density is kept constant; still others may provide combinations wherein both the dot area and the dot density may vary.

In case of a binary ink-jet printer using a light ink and a dark ink we can use a multilevel error diffusion with 3 levels: level 0 = no drop of ink, level 1 = a drop of light ink, level 2 = a drop of dark ink.

Another example of an ink-jet printer with 6 levels: level 0 = no drop of ink, level 1 = a small drop of light ink, level 2 = a medium drop of light ink, level 3 = a large drop of light ink, level 4 = a medium drop of dark ink, level 5 = a large drop of dark ink.

While printing with multiple drop sizes is most often implemented in this way, printing with multiple ink densities is more often implemented by applying a set of inksplit curves, a set of lookup tables transforming each gray value into a set of gray values, one for each ink (e.g. light and dark ink). The thus obtained channels are processed independently by error diffusion algorithms to produce the output image channels. This method provides more control over how much light and dark ink is used to produce a certain tone value than the multilevel ED method. The inksplit method is chosen because the extra control on the ink quantities can be used to eliminate drying problems and image artifacts such as banding.

SUMMARY OF THE INVENTION

The present invention is a method for processing a digitized continuous tone image for printing the image by a printing device, as claimed in independent claim 1. Preferred embodiments of the invention are set out in the dependent claims. Preferably, a method in accordance with the invention is implemented by a computer program as claimed in claim 9. The invention also includes a computer readable medium comprising program code adapted to carry out such a method, and a printed material obtained by such a method. The invention further includes an ink-jet printer comprising means for performing such a method.

In a preferred embodiment of the invention a multilevel ED algorithm is provided that allows to specify for each tone the fraction of pixels filled by each of the ED levels.

The specification may be made via a set of curves which may be hard-coded, read from file, specified by a user through a user interface.

## BRIEF DESCRIPTION OF THE DRAWINGS

The invention is described with reference to the following drawings without the intention to limit the invention thereto, and in which:

Fig. 1 diagrammatically shows an embodiment in accordance with the invention; and
Fig. 2 shows a set of levelsplit curves as used by this embodiment.

## DETAILED DESCRIPTION OF THE INVENTION

In a preferred embodiment of the invention, a set of levelsplit curves is used, that define, for each tone value and each level, what fraction of the pixels will be filled by the different levels, i.e. what contribution the different levels make to reproduce a given tone value. In the case of a binary printer the set levelsplit curves may be the set of inksplit curves.

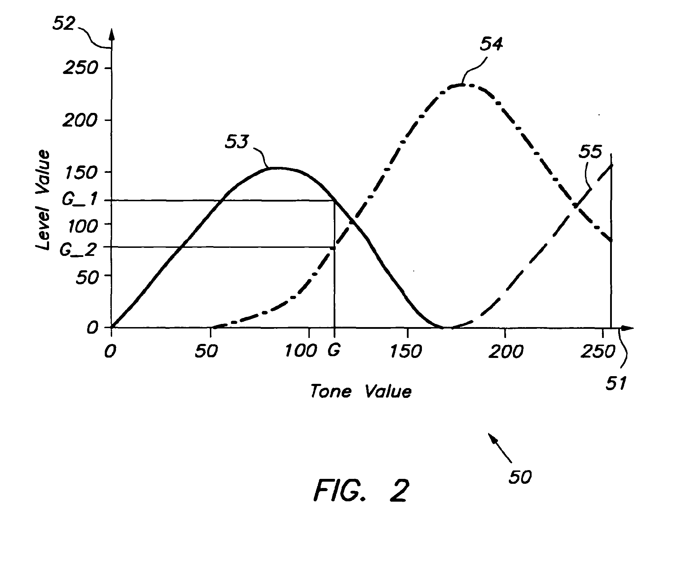

Fig. 2 shows an example of levelsplit curves for a printing system with three drop sizes (small, medium, large). In diagram 50, the horizontal axis 51 represents tone value, while the vertical axis 52 represents level value. Each tone value is transformed into a maximum of three level values in this example, as there are three levelsplit curves: curve 53 for the small drop size, curve 54 for medium drop size and curve 55 for large drop size. For example tone value G is transformed into level values G_1 and G_2.

In this drawing, the tone value and level values are in the range 0 .. 255. They may of course also be in other ranges; they may also be scaled to the interval [0 .. 1] or to 0 .. 100%, as is generally done in the description below.

These curves may be designed by a user with the help of a user interface, allowing to draw curves or to specify curves by changing a few numbers, such as the start and end point of the different curves, their maximal height, etc. Alternatively they may be generated by a computer program to optimize certain system properties such as grain, ink amount, banding artifacts, etc.

A levelsplit curve may also be given in the form of a table.

As discussed above, a level may be realized by a combination of a dot area, corresponding in ink-jet printing to an ink drop size, and a dot density, corresponding in ink-jet printing to an ink density.

Moreover, a level may also correspond to an overlap of at least two dot area / dot density combinations, as will now be explained.

Take again the example with 6 levels discussed above: level 0 = no drop of ink, level 1 = a small drop of light ink, level 2 = a medium drop of light ink, level 3 = a large drop of light ink, level 4 = a medium drop of dark ink, level 5 = a large drop of dark ink. This case may be represented by five levelsplit curves, for levels 1 to 5. We can avoid overlaps of the different levels on a single pixel, by keeping the sum of all curves smaller than or at most equal to one (i.e. 100 %). In case we do want to allow for overlaps, we may achieve this in different ways.

In a first embodiment, the overlaps are defined as additional levels, and we will have a separate curve describing the contribution of such an additional level to the tone value. E.g. in the binary printer example discussed above we may have 4 levels instead of 3: level 0 = no drop of ink, level 1 = a drop of light ink, level 2 = a drop of dark ink, and now additionally level 3 = a drop of both light and dark ink on top of each other. We will need 3 levelsplit curves in this case.

In a second embodiment, we allow that the sum of the levelsplit curves is larger than 1. E.g. when at a particular tone value we have a contribution of 40% of level 1 and 70% of level 2, this will result in a 10% overlap of levels 1 and 2 (10% = 40% + 70% - 100%).

In both these embodiments, it is possible to specify the exact amount of overlap between each of the levels. This is an additional advantage of using levelsplit curves. When using the classic inksplit curves with standard error diffusion, the overlap between drops of light ink and dark ink is not controlled entirely by the curves, but depends to a large extent on the details of the error diffusion process. Take for example a case with two inksplit curves, and suppose that for a given tone value, $level_1$ = 20% and $level_2$ = 20%. If now, for both levels, an ED algorithm is used that is sufficiently random (e.g. by providing enough noise, or by changing the threshold value in a random way), then the overlap of both levels will be $0.2 \times 0.2 = 0.04 = 4\%$. If, on the other hand, for both levels identically the same error diffuser is used, without noise, then the same pixels will be set for both levels, so that the overlap will be 20%.

In a preferred embodiment of the invention, the error diffuser is such that the overlap of the levels on a given pixel is controlled by the levelsplit curves and is independent of the error diffuser. This offers the advantage of full control over the specific contributions of the levels to the tone, as well as full control over the overlap between different levels. Moreover, this control may be done outside of the error diffusion process. The overlap may be controlled for printing devices using only one drop size and inks of different densities, for printing devices using multiple drop sizes and an ink of one density, for printing devices using multiple drop sizes and inks of different densities.

The advantage of laying the full control of level usage outside of the error diffuser is that the error diffuser is far more adaptable to new situations, e.g. new printer type, new inks, new media, other application. It gives a user the possibility to rule out certain levels that may be responsible for certain artefacts such as banding. It offers the possibility to make other trade-offs between graininess and ink usage for different applications, without changing anything to the error diffusion algorithm.

Moreover, the percentage of white pixels may be controlled as well. It is equal to 1 minus the sum of the levelsplit curves, when expressed in the interval [0 .. 1].

The levelsplit curves may be read from a file or even adapted interactively by a user of the ED.

In classical multilevel error diffusion, using a multilevel quantiser or multiple thresholds, use of the different levels and their overlaps is only controlled partially and indirectly via manipulation and randomisation of the thresholds, as illustrated already above by the example of the two inksplit curves.

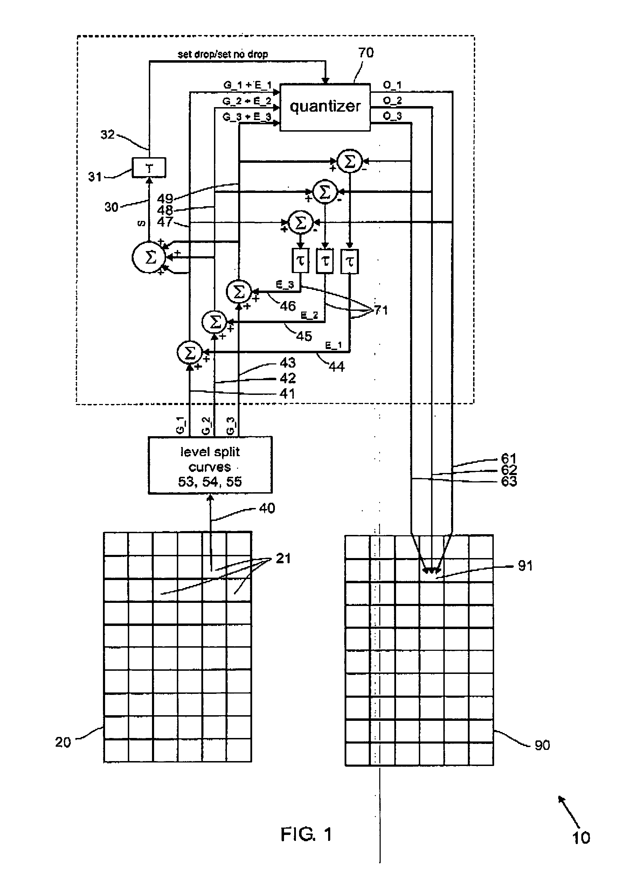

Fig. 1 shows a preferred embodiment 10 of the invention, wherein the ED algorithm using the levelsplit curves is as follows.

Suppose we have K levelsplit curves, i.e. K levels other than the one where no ink is applied (53, 54, 55 in FIG. 1).

The input image 20 contains a plurality of input pixels 21. We scan the image, e.g. in a linewise manner.

For each encountered pixel 21, we perform the following steps:

Step 1: Transform the incoming gray value G (40 in FIG. 1) to K level values $G\_1,...,G\_K$ (41, 42, 43 in FIG. 1) by the levelsplit curves (53, 54, 55 in FIG. 1 and FIG. 2).

Step 2: Modify the values $G\_1,...,G\_K$ (41, 42, 43 in FIG. 1) by adding quantization errors 44, 45, 46 received from neighboring, previously processed pixels to obtain modified level values $G\_i + E\_i$ (47, 48, 49 in FIG. 1). This is the feedback 71 in Figure 1.

Step 3: Calculate the sum $S=\Sigma G\_i$ (30 in FIG. 1) of the modified level values $G\_i + E\_i$ (47, 48, 49 in FIG. 1).

Step 4: Find the channel i=imax having the largest value of the modified level values $G\_i$ (47, 48, 49 in FIG. 1).

Step 5: Quantization of the modified level values $G\_i + E\_i$ (47, 48, 49 in FIG. 1) yielding output values $O\_i$ (61, 62, 63 in FIG. 1) :

If the sum S (30 in FIG. 1) is larger than the threshold T (31 in FIG. 1):

$O\_i = 1$, for i=imax (i.e. set a drop; ref. 32 in FIG. 1)
$O\_i = 0$, for all other i (i.e. set no drop; ref. 32 in FIG. 1)

Else

$O\_i = 0$, for all i

Step 6: Obtain quantization errors $E\_i$ (44, 45, 46 in FIG. 1) for all K channels and diffuse them to neighboring unprocessed pixels.

When allowing sum values of levelsplit curves larger than 1, step 5 above will be replaced by:

Step 5': Quantization of the values $G\_i$ yielding output values $O\_i$: $O\_i = 0$, for all i

While S is larger than the threshold T

$O\_i = 1$, for i=imax
S is replaced by S-1
$G\_i$ is replaced by $G\_i$ -1
Find the channel i=imax having the largest value of $G\_i$

When the sum of the levelsplit curves is smaller than 2 (= 200%), the above while loop is performed no more than 2 times at most.

The quantized level values 61, 62, 63 are now used to set pixel 91 in output image 90.

Other embodiments of an ED algorithm that uses the levelsplit curves are as follows. Instead of using the sum S of pixel values, another function $f(G\_1,...,G\_K)$ may be used. More specifically we may use a linear combination of the $G\_i$, with minor adaptations to the algorithm outlined above.

Another possibility of changing the algorithm is to group certain levels together (e.g. all levels with a certain drop size, irrespective of their ink density). We can then replace the binary threshold T by a multilevel quantiser. In our example, the output of this quantiser will be No drop/A drop of Light Ink/A drop of Dark Ink/ An overlap of Light and Dark Ink. The second quantiser will then decide over the size of the drop.

As discussed already above, in a preferred embodiment of the invention, the error diffuser is such that the overlap of the levels on a given pixel is controlled by the levelsplit curves and is independent of the error diffuser.

The following example illustrates this: with two different sets of levelsplit curves, the contributions of two levels to reproduce a given tone value are the same, but the overlap of the levels is different, while nothing is changed to the error diffuser. The first set of curves contains two curves, for levels $L_1$ and $L_2$, so that their sum is at most equal to 100% (these curves represent a combination of a dot density and a dot area, not an overlap). As explained before, the overlap is thus zero. The second set is based on the first set and contains three curves, as follows:

$$L_{OV} = \text{Min} \{L_1, L_2\}$$

(i.e., for each tone value, the value of $L_{OV}$ is the minimum value of $L_1$ and $L_2$)

$$L'_1 = L_1 - L_{OV}$$

$$L'_2 = L_2 - L_{OV}$$

For this second set, $L_{OV}$ gives the overlap of levels $L_1$ and $L_2$ ; this overlap is maximal.

It is also possible to specify that a particular overlap of two levels is to be zero, or that more overlaps, even all overlaps of all levels are to be zero; this may be advantageous with respect to drying (in these cases, a level means a combination of a dot area and a dot density, not an overlap of two or more of such combinations).

The present invention can be applied to black and white printing devices and to color printing devices. It is especially suitable for ink-jet printing, but may also be applied to other printing techniques (such as electrophotography). Also, white ink may be used, which may be together with a combination of other inks, e.g. CMYK inks, and possibly on a non-white (e.g. black) receiving substrate.

Those skilled in the art will appreciate that numerous modifications and variations may be made to the embodiments disclosed above without departing from the scope of the appended claims.

List of reference signs

> 10 : embodiment
> 20 : input image
> 21 : input pixel
> 30 : sum
> 31 : threshold
> 32 : drop/no drop
> 40 : tone value
> 41, 42, 43 : level value
> 44, 45, 46 : error value
> 47, 48, 49 : modified level value
> 50 : diagram
> 51 : axis
> 52 : axis
> 53, 54, 55 : levelsplit curve
> 61, 62, 63 : output value
> 70 : quantizer
> 71 : feedback
> 90 : output image

91 : output pixel

**Claims**

1. A method for processing a digitized continuous tone image (20) for reproducing said image (20) by a printing device, wherein said image (20) comprises a plurality of pixels (21), the method comprising the steps of:

   > - inputting a tone value (40) of an input pixel (21) of said image (20);
   > - applying a plurality of levelsplit curves (53, 54, 55) to said tone value (40), thus obtaining a plurality of level values (41, 42, 43);
   > - modifying said level values (41, 42, 43) by adding to them diffused quantization errors (44, 45, 46) obtained from a previous processing step to obtain modified level values (47, 48, 49);
   > - processing said modified level values (47, 48, 49) together to select the levels (61, 62, 63) to be recorded in the output pixel (91), or none in the case no dot is to be printed at the output pixel;
   > - obtaining quantization errors (44, 45, 46) from the modified level values (47, 48, 49) and the processed modified level values (61, 62, 63) and
   > - diffusing said quantizing errors (44, 45, 46) to unprocessed pixels.

   **characterized in that**:

   > each specific levelsplit curve (53, 54, 55) out of said plurality of levelsplit curves corresponds to a level defined by
   >
   > > (i) a combination of a dot density and a dot area, to be applied by said printing device to a receiving substrate for reproducing said image; or
   > > (ii) an overlap of a plurality of such combinations;
   >
   > and wherein each said specific levelsplit curve defines, for said tone value (40) of said input pixel (21), which fraction of output pixels (91) of said image when reproduced by said printing device is to be filled by the level corresponding to said specific levelsplit curve when reproducing said tone value (40).

2. The method according to claim 1 further comprising the step of reading said plurality of levelsplit curves (53, 54, 55) from a file.

3. The method according to claim 1 further comprising the step of inputting said plurality of levelsplit curves (53, 54, 55) through a user interface.

**4.** The method according to any one of claims 1 to 3 further comprising the step of providing a set of said levelsplit curves (53, 54, 55) for setting said overlap of levels to zero.

**5.** The method according to any one of claims 1 to 3 further comprising the step of providing another set of said levelsplit curves (53, 54, 55) for setting all overlaps of all levels to zero.

**6.** The method according to any one of the preceding claims further comprising the step of printing said image on said receiving substrate, thus obtaining a printed material.

**7.** An ink-jet printer comprising means for performing the method according to claim 1, wherein said dot density is an ink density of said ink-jet printer and said dot area is an ink drop size of said ink-jet printer.

**8.** A computer program comprising computer program code means adapted to perform the method according to any one of claims 1 to 3 when said program is run on a computer.

**9.** A computer readable medium comprising program code adapted to carry out the method according to any one of claims 1 to 3 when run on a computer.


**Patentansprüche**

**1.** Ein Verfahren zur Verarbeitung eines digitalisierten Halbtonbildes (20) zur Darstellung des Bildes (20) mittels eines Druckgeräts, wobei das Bild (20) aus einer Vielzahl von Pixeln (21) zusammengesetzt ist und das Verfahren folgende Schritte umfasst :

- Eingabe eines Tonwerts (40) eines Eingabepixels (21) des Bildes (20),
- Umsetzung des Tonwerts (40) in mehrere Stufenwerte (41, 42, 43) über mehrere Stufenspaltungskurven (53, 54, 55),
- Änderung der Stufenwerte (41, 42, 43), indem diesen Werten die aus einem vorangehenden Verarbeitungsschritt einbezogenen verteilten Quantisierungsfehler (44, 45, 46) hinzugefügt und so modifizierte Stufenwerte (47, 48, 49) erhalten werden,
- gemeinsame Verarbeitung der modifizierten Stufenwerte (47, 48, 49) zur Bestimmung der Stufen (61, 62, 63), die im Ausgabepixel (91) zu drucken sind, wobei keine Stufen ausgewählt werden, falls kein Punkt im Ausgabepixel (91) zu setzen ist,
- Erhalten von Quantisierungsfehlern (44, 45, 46) aus den modifizierten Stufenwerten (47, 48, 49) und den verarbeiteten modifizierten Stufenwerten (61, 62, 63) und
- Verteilen der Quantisierungsfehler (44, 45, 46) auf noch nicht gerasterte Pixel,

**dadurch gekennzeichnet, dass** :

jede spezifische Stufenspaltungskurve (53, 54, 55) der mehreren Stufenspaltungskurven einer Stufe entspricht, die definiert wird durch :

(i) eine Kombination einer Punktdichte und einer Flächendeckung, mit der ein Empfangssubstrat zur Darstellung des Bildes mittels des Druckgeräts bedruckt wird oder
(ii) eine Überlappung einer Vielzahl solcher Kombinationen,

und wobei jede obengenannte spezifische Stufenspaltungskurve für den Tonwert (40) des Eingabepixels (21) definiert, welcher Anteil der durch das Druckgerät zu druckenden Ausgabepixel (91) des Bildes durch die der spezifischen Stufenspaltungskurve entsprechende Stufe beim Drucken des Tonwerts (40) ausgefüllt werden muss.

**2.** Verfahren nach Anspruch 1, das ferner den Schritt umfasst, in dem die Vielzahl von Stufenspaltungskurven (53, 54, 55) aus einer Datei ausgelesen wird.

**3.** Verfahren nach Anspruch 1, das ferner den Schritt umfasst, in dem die Vielzahl von Stufenspaltungskurven (53, 54, 55) über eine Benutzerschnittstelle eingegeben wird.

**4.** Verfahren nach einem der Ansprüche 1 bis 3, das ferner den Schritt umfasst, in dem ein Satz der Stufenspaltungskurven (53, 54, 55), durch den die Überlappung von Stufen auf 0 gesetzt wird, bereitgestellt wird.

**5.** Verfahren nach einem der Ansprüche 1 bis 3, das ferner den Schritt umfasst, in dem ein weiterer Satz der Stufenspaltungskurven (53, 54, 55), durch den alle Überlappungen aller Stufen auf 0 gesetzt wird, bereitgestellt wird.

**6.** Verfahren nach einem der vorstehenden Ansprüche, das ferner den Schritt umfasst, in dem das Bild auf dem Empfangssubstrat gedruckt und so ein bedrucktes Material erhalten wird.

**7.** Ein Tintenstrahldrucker mit Mitteln zur Ausführung des Verfahrens nach Anspruch 1, **dadurch gekennzeichnet, dass** die Punktdichte einer Tintendichte des Tintenstrahldruckers entspricht und die Flächendeckung einer Tintentropfengröße des Tintenstrahldruckers entspricht.

**8.** Ein Computerprogramm, das Computerprogrammcodemittel umfasst, die bei Verwendung des Programms auf einem Computer die Ausführung des Verfahrens nach einem der Ansprüche 1 bis 3 sichern.

**9.** Ein computerlesbares Medium, enthaltend einen Programmcode, der bei Verwendung auf einem Computer die Ausführung des Verfahrens nach einem der Ansprüche 1 bis 3 sichert.

**Revendications**

**1.** Un procédé pour le traitement d'une image demi-teinte digitalisée (20) en vue de la reproduction de cette image (20) à l'aide d'un appareil d'impression, ladite image (20) étant constituée d'une multitude de pixels (21) et ledit procédé comprenant les étapes ci-après :

- l'entrée d'une valeur tonale (40) d'un pixel d'entrée (21) de l'image (20),
- la conversion de la valeur tonale (40) en plusieurs valeurs de niveau (41, 42, 43) par plusieurs courbes de division de niveau (53, 54, 55),
- la modification des valeurs de niveau (41, 42, 43) en ajoutant à ces valeurs les erreurs de quantification diffusées (44, 45, 46) reçues d'une étape de traitement précédente, obtenant ainsi des valeurs de niveau modifiées (47, 48, 49),
- le traitement combiné des valeurs de niveau modifiées (47, 48, 49) afin de sélectionner les niveaux (61, 62, 63) à imprimer dans le pixel de sortie (91), aucun niveau n'étant sélectionné dans le cas où aucun point n'est à déposer dans le pixel de sortie (91),
- l'obtention d'erreurs de quantification (44, 45, 46) à partir des valeurs de niveau modifiées (47, 48, 49) et des valeurs de niveau modifiées traitées (61, 62, 63) et
- la répartition des erreurs de quantification (44, 45, 46) sur des pixels pas encore traités,

**caractérisé en ce que** :

chaque courbe de division de niveau spécifique (53, 54, 55) des plusieurs courbes de division de niveau correspond à un niveau qui, à son tour, est défini par :

(i) une combinaison d'une densité de point et d'une surface de point que l'appareil d'impression imprimera sur un substrat récepteur en vue de la reproduction de l'image ou
(ii) un recouvrement d'une multitude de telles combinaisons,

et que chaque courbe de division de niveau spécifique définit, pour la valeur tonale (40) du pixel d'entrée (21), la fraction des pixels de sortie (91) de l'image à reproduire par l'appareil d'impression qui est à remplir par le niveau correspondant à la courbe de division de niveau spécifique lors de la reproduction de la valeur tonale (40).

**2.** Procédé selon la revendication 1, comprenant en outre l'étape dans laquelle la multitude des courbes de division de niveau (53, 54, 55) est lue depuis un fichier.

**3.** Procédé selon la revendication 1, comprenant en outre l'étape dans laquelle la multitude des courbes de division de niveau (53, 54, 55) est entrée à travers une interface utilisateur.

**4.** Procédé selon l'une quelconque des revendications 1 à 3, comprenant en outre l'étape dans laquelle on procure une série desdites courbes de division de niveau (53, 54, 55) afin de mettre le recouvrement de niveaux à 0.

**5.** Procédé selon l'une quelconque des revendications 1 à 3, comprenant en outre l'étape dans laquelle on procure une autre série desdites courbes de division de niveau (53, 54, 55) afin de mettre tous les recouvrements de tous les niveaux à 0,

**6.** Procédé selon l'une quelconque des revendications précédentes, comprenant en outre l'étape dans laquelle l'image est imprimée sur le substrat récepteur, donnant ainsi un matériau imprimé.

**7.** Une imprimante à jet d'encre munie de moyens servant à l'exécution du procédé selon la revendication 1, **caractérisée en ce que** la densité de point correspond à une densité d'encre de l'imprimante à jet d'encre et que la surface de point correspond à une taille de goutte d'encre de l'imprimante à jet d'encre.

**8.** Un logiciel comprenant des moyens de code de logiciel appropriés pour assurer l'exécution du procédé selon l'une quelconque des revendications 1 à 3 lorsque le logiciel est utilisé sur un ordinateur.

**9.** Un moyen assimilable par ordinateur comprenant un code de programme qui, lorsqu'il est utilisé sur un ordinateur, est approprié pour assurer l'exécution du procédé selon l'une quelconque des revendications 1 à 3.

FIG. 1

FIG. 2

**EP 1 592 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4680645 A
- US 5975671 A
- US 5963714 A